# EUROPÄISCHE PATENTSCHRIFT

(11) **EP 3 115 671 B1**
(45) Veröffentlichungstag und Bekanntmachung des Hinweises auf die Patenterteilung: **13.11.2019**
(21) Anmeldenummer: 15175653.3
(22) Anmeldetag: 07.07.2015
(51) Int. Cl.: F16L 47/03, F16L 47/24, B29C 45/14, B29C 65/34

(54) **TRANSITION FITTING**
TRANSITION FITTING
RACCORD DE TRANSITION

(43) Veröffentlichungstag der Anmeldung: 11.01.2017
(73) Patentinhaber: Georg Fischer JRG AG, 4450 Sissach (CH)
(72) Erfinder: Schwarz, Oliver, 78315 Radolfzell (DE); Porfido, Erasmo, 8234 Stetten (CH)
(74) Vertreter: Fenner, Seraina

(56) Entgegenhaltungen:
- JP-A- H02 256 996
- JP-B2- 3 174 703

## Beschreibung

Die Erfindung betrifft ein Transition Fitting zum Verbinden eines Kunststoffrohrendes mit einem bestehenden Anschluss beinhaltend ein Anschlusselement zur Adaptierung an einen bestehenden Anschluss, wobei das Anschlusselement einen Befestigungsbereich und einen Umspritzbereich aufweist, ein Dichtelement zur Herstellung der Dichtheit zwischen Anschlusselement und dem Elektroschweissfitting, ein Elektroschweissfitting aus schweissbarem Kunststoff, wobei das Elektroschweissfitting ein Heizelement aufweist.

Solche Transition Fittings dienen dem Übergang von unterschiedlichen Rohrleitungen, Ventilen und auch Armaturen, das heisst, dass Rohrleitungskomponente aus unterschiedlichen Materialien miteinander verbunden werden sollen, wozu ein Transition Fitting eingesetzt werden kann. Beispielsweise sind Armaturen oft aus einem metallischen Werkstoff und sollen mit Kunststoffrohrleitungen verbunden werden. Diese Verbindung bzw. Übergang der unterschiedlichen Materialien wird durch ein Transition Fitting ermöglicht.

Aus dem Stand der Technik sind Lösungen bekannt wie sie die FR 2 538 879 offenbart. Das Übergangsstück ist meist aus einem metallischen Werkstoff und wird oft mittels eines Innen-oder Aussengewindes an bspw. eine Armatur geschraubt. Das andere Ende des Übergangsstücks weist einen Klemmbereich auf indem ein anzuschliessendes Kunststoffrohr aufgenommen und geklemmt wird, wobei als anzuschliessendes Kunststoffrohr meist ein Zwischenstück aus Kunststoff verwendet wird und dieses dann mit der effektiven Kunststoffrohrleitung mit einer Elektroschweissmuffe verbunden bzw. verschweisst wird.

Nachteilig an einer solchen Lösung ist der hohe Montageaufwand sowie der grosse Platzbedarf bzw. die lange Einbaulänge des Übergangsfittings mit Zwischenstück und darauffolgende Elektroschweissmuffe.

Die EP 0 493 316 A1 offenbart eine Vorrichtung zum Verbinden eines Kunststoff- oder Verbundrohres mit einem weiteren Leitungsteil, wobei die Verbindung ein Fitting aufweist, der mittels eines Gewindes an bspw. eine Armatur adaptiert ist. Am anderen Ende des Fittings ist eine Elektroschweissmuffe angeordnet, die zur Verschweissung des eingesteckten Kunststoffrohres dient. Die Elektroschweissmuffe und das Fitting sind separat hergestellte Bauteile und werden zusammengesteckt und mittels Ultraschallschweissen miteinander verbunden.

Nachteilig an dieser Vorrichtung ist neben dem erforderlichen Zeitaufwand der Vormontage des Fittings mit der Schweissmuffe mittels Ultraschallschweissung auch dass eine Verengung des Querschnitts durch den Nippel des Fittings entsteht auf den das zu verschweissende Kunststoffrohr aufgeschoben wird.

Die JPH02256996 offenbart einTransition Fitting gemäß dem Oberbegriff des Anspruchs 1.

Es ist Aufgabe der vorliegenden Erfindung ein Transition Fitting vorzuschlagen, das eine kurze Baulänge aufweist sowie die Montage vereinfacht und wenig Zeit dafür in Anspruch nimmt. Zudem sollte der innere Querschnitt des Transition Fittings dem des anzuschliessenden Rohres entsprechen bzw. nicht reduziert werden oder die Strömung nachteilig beeinflusst werden.

Diese Aufgabe wird erfindungsgemäss dadurch gelöst, dass das Elektroschweissfitting durch Spritzgiessen formschlüssig und unlösbar an das Anschlusselement angeformt bzw. angespritzt ist, und dass sich der Kunststoff des Elektroschweissfittings im Umspritzbereich des Anschlusselements entlang des innen- und Aussenumfangs erstreckt. Das heisst, dass das erfindungsgemässe Transition Fitting mittels Spritzgiessverfahren hergestellt wird, bzw. dass das Elektroschweissfitting mittels Spritzgiessverfahren formschlüssig und unlösbar mit dem Anschlusselement verbunden wird.

Das erfindungsgemässe Transition Fitting beinhaltet ein Anschlusselement, welches aus Metall und/oder Kunststoff sein kann. In der Regel werden solche Anschlusselemente vorfabriziert, so dass das Anschlusselement einen Befestigungsbereich und einen Umspritzbereich aufweist. Der Befestigungsbereich weist ein Verbindungselement auf das beispielsweise als Innen-oder Aussengewinde ausgebildet ist um an einem bestehenden Anschluss befestigt werden zu können.

Zudem weist der Befestigungsbereich vorzugsweise einen Mehrkant auf, der das Befestigen an einen bestehenden Anschluss bzw. das Befestigen des Transition Fittings an einen bestehenden Anschluss ermöglicht.

Das Anschlusselement weist zudem einen Umspritzbereich auf. Dieser wird vom Elektroschweissfitting formschlüssig und unlösbar ummantelt, wobei das Elektroschweissfitting durch Umspritzen am Anschlusselement angebracht wird.

Der Umspritzbereich des Anschlusselements weist Durchgänge auf damit eine unlösbare und formschlüssige Verbindung zwischen Elektroschweissfitting und Anschlusselement gebildet wird.

Vorzugsweise sind die Durchgänge als Bohrbild ausgebildet, wobei sich das Bohrbild vorzugsweise regelmässig entlang des Umfangs im Umspritzbereich des Anschlusselements erstreckt. Die Durchgänge ermöglichen dem Kunststoff ein Umschliessen des Anschlusselements im Umspritzbereich, das heisst, dass der Umspritzbereich komplett vom Elektroschweissfitting bzw. dessen Kunststoff ummantelt ist, da der Kunststoff auch durch die Durchgänge hindurch tritt und sich entlang des Innenumfangs im Umspritzbereich erstreckt.

Um in einer bevorzugten Ausgestaltung einen höheren bzw. besseren Formschluss zwischen Elektroschweissfitting und Anschlusselement zu erreichen, vor allem im Übergangsbereich zwischen Umspritz-und Befestigungsbereich, weist das Anschlusselement Konturen auf. Diese verhindern auch ein ungewolltes Ablösen des Kunststoffs vom Anschlusselement. Vorteilhaft ist die Kontur in der Mantelfläche im Umspritzbereich des Anschlusselements angeordnet, vorzugsweise in der äusseren Mantelfläche, wobei sie als Nuten ausgebildet sind.
Die Nuten zeichnen sich dadurch aus, dass sie entlang des Aussenumfangs verlaufen, vorzugsweise in einem Eckbereich angeordnet und radial und axial ausgerichtet sind. Dies verhindert das Ablösen des Elektroschweissfittings vom Anschlusselement, speziell im Eckbereich wo eine solche Gefahr erhöht besteht.

Das erfindungsgemässe Transition Fitting weist einen durchgehenden, kontinuierlichen Innendurchmesser auf, ohne hineinragenden Innennippel zum Aufschieben von Rohrleitungen.
Durch das Umspritzen des Anschlusselements ist es möglich, dass der Innendurchmesser des Transition Fittings dem des anzuschliessenden Rohrleitungsendes entspricht und somit durch die Verbindung mittels des erfindungsgemässen Transition Fittings keine Engstellen entstehen.

Auf der gegenüberliegenden Seite des Verbindungselements am Anschlusselement befindet sich das Elektroschweissfitting, welches formschlüssig mit dem Anschlusselement verbunden ist. Zusammen bilden das Elektroschweissfitting und das Anschlusselement das Transition Fitting.

Das Elektroschweissfitting ist aus schweissbarem Kunststoff gebildet und weist ein Heizelement auf. Das Heizelement weist vorzugsweise einen Wicklungsträger auf, auf den ein Metalldraht gewunden ist, der als leitendes Element dient um dadurch den Kunststoff des Wicklungsträgers, des Elektroschweissfittings sowie den Kunststoff des eingeschobenen Rohrleitungsendes zu erwärmen und miteinander zu verschmelzen bzw. zu verschweissen. Um die benötigte Energiezufuhr zu ermöglichen, weist der Metalldraht mindestens einen Anschlussstecker auf.

Der Wicklungsträger ist aus schweissbarem Kunststoff gebildet, vorzugsweise aus demselben wie das Elektroschweissfitting.

Selbstverständlich weist das Elektroschweissfitting einen Indikator auf, mittels dem festgestellt werden kann ob eine Schweissung bereits durchgeführt wurde oder nicht.

Des Weiteren ist es von Vorteil, wenn ein Anschlag im Transition Fitting im Bereich des Elektroschweissfittings angeordnet ist. Dadurch kann bei der Montage festgestellt werden ob die geforderte Einstecktiefe des Rohrleitungsendes erreicht ist.

Um die Dichtheit des Transition Fittings zu gewährleisten, ist im Umspritzbreich ein Dichtelement angeordnet und wird ebenso vom Kunststoff des Elektroschweissfittings umspritzt analog dem Anschlusselement im Umspritzbereich. Vorzugsweise ist das Dichtelement als O-Ring ausgebildet. Als bevorzugte Ausgestaltung hat sich auch gezeigt, wenn die O-Ringnut bzw. der Radius der Nut mit dem des O-Rings deckungsgleich ausgebildet ist, wodurch der O-Ring während des Spritzgiessvorgangs gesichert in der Nut angeordnet ist. Zudem wirkt durch die Materialschwindung beim Abkühlen des Kunststoffs des Elektroschweissfittings eine weitere vorteilhafte Presskraft auf den O-Ring.

Als vorteilhaft hat sich auch gezeigt, dass am Elektroschweissfitting des Transition Fittings ein Klemmelement angeordnet ist, vorzugsweise eine Klemmbride. Dies ermöglicht eine einfache Montage indem das Rohrleitungsende durch das Klemmelement arretiert werden kann und dann der Schweissvorgang erfolgen kann.

Als vorteilhafte Ausgestaltung hat sich auch gezeigt, wenn Laschen zur Klemmspaltabdeckung am Klemmelement angeordnet sind. Die Laschen sind am Innendurchmesser des Elektroschweissfittings angeordnet und verhindern den Materialaustritt während des Schweissvorgangs.

Als eine mögliche Alternative zu einem Transition Fitting wäre es auch denkbar ein Ventil direkt mit einem Anschlusselement zu kombinieren, das heisst, dass beispielsweise ein Gehäuse eines Ventils an das Anschlusselement angespritzt werden könnte.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt durch ein erfindungsgemässes Transition Fitting,
- Fig. 2: einen Längsschnitt durch ein Anschlusselement eines erfindungsgemässen Transition Fittings,
- Fig. 3: eine dreidimensionale Ansicht eines erfindungsgemässen Transition Fittings und
- Fig. 4: einen Teilschnitt durch das Klemmelement des Elektroschweissfittings des Transition Fittings

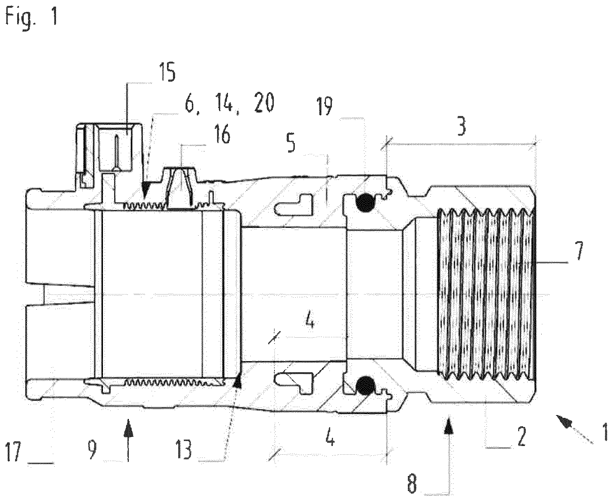

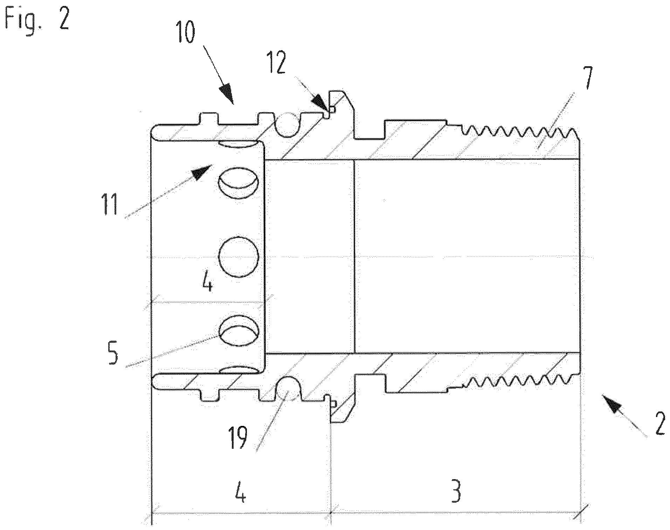

Fig. 1 zeigt einen erfindungsgemässen Transition Fitting 1. Wobei das Transition Fitting 1 ein Anschlusselement 2 beinhaltet, welches vorzugsweise vorfabriziert wurde. Das Anschlusselement 2 kann aus einem metallischen Werkstoff und/oder Kunststoff gebildet sein. Es dient dem Anschliessen an einen bestehenden Anschluss, bspw. an eine Armatur die als Anschluss ein Gewinde aufweist. Um nun Rohrleitungsenden aus Kunststoff mit einer bspw. bestehenden Armatur zu verbinden, kann nun das erfindungsgemässe Transition Fitting 1 eingesetzt werden. Durch das erfindungsgemässe Transition Fitting 1 ist eine kurze Einbaulänge gewährleistet sowie eine einfache und rasche Montage. Das Anschlusselement 2 weist einen Umspritzbereich 4 und einen Befestigungsbereich 3 auf. Der Befestigungsbereich 3 dient dem Anschliessen des Transition Fittings 1 an einen bestehenden Anschluss. Vorzugsweise weist das Anschlusselement 2 dafür ein Verbindungselement 7 auf, bspw. ein Innen-oder Aussengewinde 7, entsprechend dem bestehenden Anschluss. Vorteilhaft ist es demzufolge, wenn das Anschlusselement 2 einen Mehrkant 8 aufweist um das Transition Fitting 1 am bestehenden Anschluss festzuziehen. Selbstverständlich sind auch andere Verbindungselemente 7 wie Schnellverschlüsse usw. denkbar, dies ist vom bestehenden Anschluss abhängig an den das Transition Fitting 1 anzuschliessen ist. Fig. 2 zeigt ein Anschlusselement 2, welches noch nicht umspritzt wurde und somit noch kein Elektroschweissfitting 9 aufweist. Zudem ist eine alternative Ausführungsform mit einem Aussengewinde 7 als Verbindungselement 7 dargestellt. Der Umspritzbereich 4 weist Durchgänge 5 auf, welche vorzugsweise als Bohrbild entlang des Umfangs des Anschlusselements 2 ausgebildet sind, was gut in Fig. 2 ersichtlich ist. Der Vorteil dieser Durchgänge 5 liegt darin, dass sich der Kunststoff des Elektroschweissfittings 9 an der Mantelaussenfläche 10 des Umspritzbereichs wie auch an der Mantelinnenfläche 11 des Umspritzbereichs 4 erstreckt. Dies ermöglicht ein Ummanteln bzw. eine formschlüssige und unlösbare Verbindung zwischen Anschlusselement 2 und Elektroschweissfitting 9. Zudem hat sich gezeigt, dass es vorteilhaft ist, wenn die Mantelflächen 10, 11 vorzugsweise die Mantelaussenfläche 10 des Anschlusselements 2 eine Kontur 12 bzw. Konturen aufweist bzw. aufweisen, die den Formschluss zwischen Elektroschweissfitting 9 und Anschlusselement 2 verbessern bzw. erhöhen. Eine bevorzugte Ausgestaltung sind Nuten 12, die sich bevorzugt an der Mantelaussenfläche 10 befinden und entlang des Umfangs erstrecken. Vorzugsweise sind die Nuten 12 im Umspritzbereich 4 in einem Eck an einem Absatz angeordnet, jeweils entsprechend radial und axial ausgerichtet und verlaufen entlang des Aussenumfangs. Dadurch wird erwirkt, dass der Kunststoff in die Nuten 12 hineingepresst wird und sich so der Kunststoff auch im Eck besser mit dem Anschlusselement 2 unlösbar verbindet.

Durch das vorliegende Transition Fitting 1 kann auf einen Innennippel auf den das einzuführende Rohrleitungsende aufgeschoben wird, wie aus dem Stand der Technik bekannt, verzichtet werden, wodurch der innere Querschnitt des Transition Fittings 1 nicht kleiner als der des anzuschliessenden Rohres ausfällt und Verengungen vermieden werden können.

Das einzuführende Rohrende wird bis zum Anschlag 13 in den Transition Fitting 1 auf der Seite des Elektroschweissfittings 9 eingeschoben. Der Anschlag 13 gewährleistet, dass das anzuschliessende Rohr auch genügend tief eingeschoben ist.

Das Elektroschweissfitting 9 des Transition Fittings 1 beinhaltet ein Heizelement 14, wobei das Heizelement 14 einen Wicklungsträger (im Detail nicht sichtbar) aufweist. Der Wicklungsträger besteht aus einem schweissbaren Kunststoff, wie auch das Elektroschweissfitting 9. Vorzugsweise weisen der Wicklungsträger und das Elektroschweissfitting 9 denselben Kunststoff auf.
Des Weiteren weist das Heizelement 14 einen Metalldraht 20 auf, welcher die Energie zur Schweissung im Schweissbereich 6 zuführt. Vorteilhaft weist der Metalldraht 20 einen Anschlussstecker 15 auf, welcher das Anschliessen an die Energieversorgung zur Durchführung der Schweissung ermöglicht. Zudem weist das Elektroschweissfitting 9 einen Indikator 16 auf, der anzeigt ob bereits eine Schweissung durchgeführt wurde.

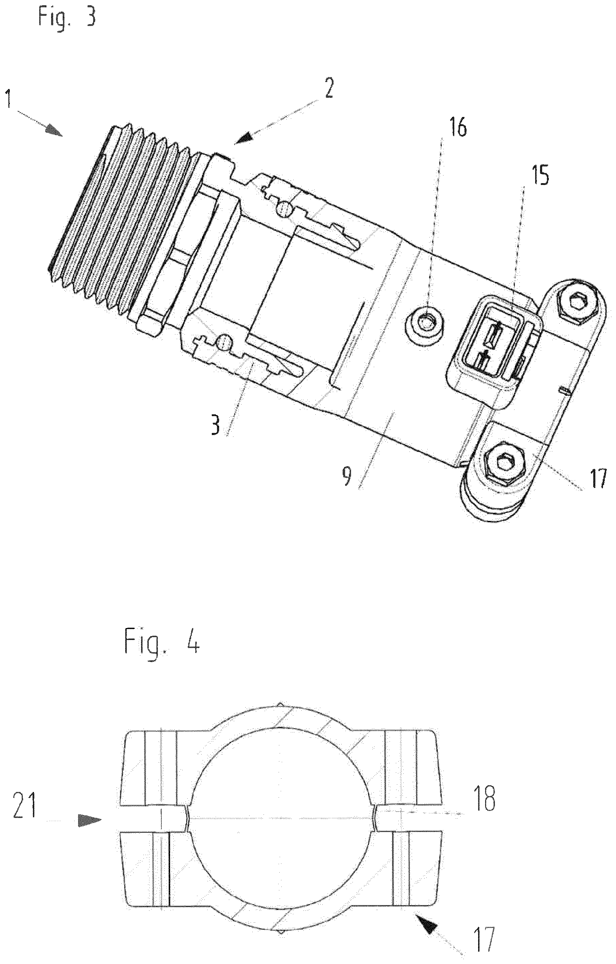

Als vorteilhafte Ausgestaltung hat sich gezeigt, wenn das Transition Fitting 1 auf der Seite des Elektroschweissfittings 9 bzw. an dessen Stirnseite ein Klemmelement 17 aufweist, dies ist in Fig. 3 gut ersichtlich. Das Klemmelement 17, welches vorzugsweise als Klemmbride ausgebildet ist, wobei auch andere Arretierungen denkbar sind, dient einer besseren Montage. Mittels dem Klemmelement 17 kann das Rohrleitungsende bis an den Anschlag 13 eingeschoben werden und dann mit dem Klemmelement 17 arretiert werde, so dass anschliessend das Rohr in vorpositioniertem Zustand verschweisst werden kann.
Bei einer Ausführungsform mit einer Klemmbride als Klemmelement 17 ist es vorteilhaft, wenn Laschen 18 zur Abdeckung des Klemmspalts 21 angeordnet sind, wie in Fig. 4 ersichtlich, dies vermeidet den unerwünschten Materialaustritt während des Schweissvorgangs.

Damit das Transition Fitting 1 bzw. das Elektroschweissfitting 9 und das Anschlusselement 2 dicht sind weist das Transition Fitting 1 ein Dichtelement 19 auf. Das Dichtelement 19 wird ebenfalls mit Kunststoff des Elektroschweissfittings 9 umspritzt.

### Bezugszeichenliste

- 1: Transition Fitting
- 2: Anschlusselement
- 3: Befestigungsbereich
- 4: Umspritzbereich
- 5: Duchgänge / Bohrbild
- 6: Schweissbereich
- 7: Verbindungselement / Innen-oder Aussengewinde
- 8: Mehrkant
- 9: Elektroschweissfitting
- 10: Mantelaussenfläche
- 11: Mantelinnenfläche
- 12: Kontur / Nut
- 13: Anschlag
- 14: Heizelement
- 15: Anschlussstecker
- 16: Indikator
- 17: Klemmelement
- 18: Lasche
- 19: Dichtelement
- 20: Metalldraht
- 21: Klemmspalt

## Patentansprüche

1. Transition Fitting (1) zum Verbinden eines Kunststoffrohrendes mit einem bestehenden Anschluss beinhaltend ein Anschlusselement (2) zur Adaptierung an einen bestehenden Anschluss, wobei das Anschlusselement (2) einen Befestigungsbereich (3) und einen Umspritzbereich (4) aufweist, ein Dichtelement (19) zur Herstellung der Dichtheit zwischen Anschlusselement (2) und dem Elektroschweissfitting (9), ein Elektroschweissfitting (9) aus schweissbarem Kunststoff, wobei das Elektroschweissfitting (9) ein Heizelement (14) aufweist, wobei das Elektroschweissfitting (9) durch Spritzgiessen formschlüssig und unlösbar an das Anschlusselement (2) angeformt bzw. angespritzt ist, **dadurch gekennzeichnet, dass** sich der Kunststoff des Elektroschweissfittings (9) im Umspritzbereich (4) des Anschlusselements (2) entlang des Innen- und Aussenumfangs erstreckt.

2. Transition Fitting (1) nach Anspruch 1, **dadurch gekennzeichnet, dass** das Heizelement (14) einen Wicklungsträger aufweist.

3. Transition Fitting (1) nach einem der Ansprüche 1 oder 2, **dadurch gekennzeichnet, dass** das Heizelement (14) einen leitenden Metalldraht (20) aufweist, wobei der Metalldraht (20) vorzugsweise mindestens einen Anschlussstecker (15) aufweist.

4. Transition Fitting (1) nach einem der Ansprüche 1 bis 3, **dadurch gekennzeichnet, dass** der Wicklungsträger aus schweissbarem Kunststoff ist, vorzugsweise aus demselben wie das Elektroschweissfitting (9).

5. Transition Fitting (1) nach einem der Ansprüche 1 bis 4, **dadurch gekennzeichnet, dass** das Anschlusselement (2) aus Metall und/oder Kunststoff ist.

6. Transition Fitting (1) nach einem der Ansprüche 1 bis 5, **dadurch gekennzeichnet, dass** am Elektroschweissfitting (9) ein Klemmelement (17) vorzugsweise eine Klemmbride angeordnet ist.

7. Transition Fitting (1) nach Anspruch 6, **dadurch gekennzeichnet, dass** das Klemmelement (17) Laschen (18) zur Klemmspaltabdeckung (21) aufweist, wobei die Laschen (18) den Materialaustritt während des Schweissvorgangs verhindern.

8. Transition Fitting (1) nach einem der Ansprüche 1 bis 7, **dadurch gekennzeichnet, dass** das Anschlusselement (2) im Umspritzbereich (4) Durchgänge (5), vorzugsweise als Bohrbild ausgebildet, aufweist, wobei die Durchgänge (5) ein komplettes Ummanteln des Umspritzbereichs (4) am Anschlusselement (2) mittels Elektroschweissfitting (9) ermöglichen.

9. Transition Fitting (1) nach einem der Ansprüche 1 bis 8, **dadurch gekennzeichnet, dass** das Anschlusselement (2) Konturen (12) im Umspritzbereich (4) aufweist, wobei die Konturen (12) einen höheren bzw. besseren Formschluss zwischen Elektroschweissfitting (9) und Anschlusselement (2) bewirken.

10. Transition Fitting (1) nach einem der Ansprüche 1 bis 9, **dadurch gekennzeichnet, dass** die Konturen (12) als in der Mantelfläche (10, 11), vorzugsweise in der Mantelaussenfläche (10) des Anschlusselements (2) im Umspritzbereich (4), verlaufende Nuten (12) ausgebildet sind.

11. Transition Fitting (1) nach einem der Ansprüche 1 bis 10, **dadurch gekennzeichnet, dass** der Transition Fitting (1) einen durchgehenden, kontinuierlichen Innendurchmesser aufweist, ohne hineinragende Innennippel zum Aufschieben von Rohrleitungsenden.

## Claims

1. Transition fitting (1) for connecting a plastic-pipe end to an existing connection, containing a connection element (2) for adaptation to an existing connection, wherein the connection element (2) has a fastening region (3) and an overmoulding region (4), also containing a sealing element (19) for establishing the sealing between the connection element (2) and the electrofusion fitting (9), and further containing an electrofusion fitting (9) made of weldable plastic, wherein the electrofusion fitting (9) has a heating element (14), wherein the electrofusion fitting (9) is attached to the connection element (2) in a form-fitting and non-releasable manner by injection moulding, **characterized in that** the plastic of the electrofusion fitting (9) extends along the inner circumference and outer circumference in the overmoulding region (4) of the connection element (2).

2. Transition fitting (1) according to Claim 1, **characterized in that** the heating element (14) has a winding support.

3. Transition fitting (1) according to either of Claims 1 and 2, **characterized in that** the heating element (14) has a conductive metal wire (20), wherein the metal wire (20) has preferably at least one connector plug (15).

4. Transition fitting (1) according to one of Claims 1 to 3, **characterized in that** the winding support is made of weldable plastic, preferably of the same weldable plastic as the electrofusion fitting (9).

5. Transition fitting (1) according to one of Claims 1 to 4, **characterized in that** the connection element (2) is made of metal and/or plastic.

6. Transition fitting (1) according to one of Claims 1 to 5, **characterized in that** a clamping element (17), preferably a clamping ring, is arranged on the electrofusion fitting (9).

7. Transition fitting (1) according to Claim 6, **characterized in that** the clamping element (17) has lugs (18) to provide clamping-gap covering (21), wherein the lugs (18) prevent material from escaping during the welding operation.

8. Transition fitting (1) according to one of Claims 1 to 7, **characterized in that** the connection element (2) has through-passages (5), preferably in the form of a pattern of bores, in the overmoulding region (4), wherein the through-passages (5) allow the overmoulding region (4) on the connection element (2) to be completely encased by means of the electrofusion fitting (9).

9. Transition fitting (1) according to one of Claims 1 to 8, **characterized in that** the connection element (2) has contours (12) in the overmoulding region (4), wherein the contours (12) provide for a higher-level or better form fit between the electrofusion fitting (9) and connection element (2).

10. Transition fitting (1) according to one of Claims 1 to 9, **characterized in that** the contours (12) are designed in the form of grooves (12) which run in the lateral surface (10, 11), preferably in the outer lateral surface (10), of the connection element (2), in the overmoulding region (4) of the latter.

11. Transition fitting (1) according to one of Claims 1 to 10, **characterized in that** the transition fitting (1) has a continuous internal diameter throughout, with no inwardly projecting inner nipples onto which pipeline ends could be pushed.

## Revendications

1. Raccord de transition (1) destiné à relier une extrémité de tube en matière synthétique à un raccord existant et comprenant un élément de raccordement (2) destiné à l'adaptation à un raccord existant, l'élément de raccordement (2) comportant une zone de fixation (3) et une zone d'encapsulation (4), un élément d'étanchéité (19) destiné à réaliser l'étanchéité entre l'élément de raccordement (2) et le raccord de soudage électrique (9), un raccord de soudage électrique (9) en matière synthétique soudable, le raccord de soudage électrique (9) comportant un élément chauffant (14), le raccord de soudage électrique (9) étant formé ou moulé par injection sur l'élément de raccordement (2) par complémentarité de formes et de manière non détachable par coulage par injection, **caractérisé en ce que** la matière synthétique du raccord de soudage électrique (9) s'étend dans la région d'enrobage (4) de l'élément de raccord (2) le long de la périphérie intérieure et de la périphérie extérieure.

2. Raccord de transition (1) selon la revendication 1, **caractérisé en ce que** l'élément chauffant (14) comporte un support d'enroulement.

3. Raccord de transition (1) selon l'une des revendications 1 et 2, **caractérisé en ce que** l'élément chauffant (14) comporte un fil métallique conducteur (20), le fil métallique (20) comportant de préférence au moins un connecteur (15).

4. Raccord de transition (1) selon l'une des revendications 1 à 3, **caractérisé en ce que** le support d'enroulement est en matière synthétique soudable, de préférence identique à celle du raccord de soudage électrique (9).

5. Raccord de transition (1) selon l'une des revendications 1 à 4, **caractérisé en ce que** l'élément de raccordement (2) est en métal et/ou en matière synthétique.

6. Raccord de transition (1) selon l'une des revendications 1 à 5, **caractérisé en ce qu'**un élément de serrage (17), de préférence une bride de serrage, est disposé au niveau du raccord de soudage électrique (9).

7. Raccord de transition (1) selon la revendication 6, **caractérisé en ce que** l'élément de serrage (17) comporte des languettes (18) destinées à recouvrir des fentes de serrage (21), les languettes (18) empêchant les fuites de matière pendant le processus de soudage.

8. Raccord de transition (1) selon l'une des revendications 1 à 7, **caractérisé en ce que** l'élément de raccordement (2) comporte dans la zone d'enrobage (4) des passages (5), se présentant de préférence sous la forme d'un motif de trous, les passages (5) permettant un enveloppement complet de la zone d'enrobage (4) sur l'élément de raccordement (2) à l'aide d'un raccord de soudage électrique (9).

9. Raccord de transition (1) selon l'une des revendications 1 à 8, **caractérisé en ce que** l'élément de raccordement (2) comporte des contours (12) dans la zone d'enrobage (4), les contours (12) réalisant une plus grande ou une meilleure liaison par complémentarité de formes entre le raccord de soudage électrique (9) et l'élément de raccordement (2).

10. Raccord de transition (1) selon l'une des revendications 1 à 9, **caractérisé en ce que** les contours (12) sont conçus sous la forme de rainures (12) qui s'étendent dans la surface d'enveloppe (10, 11), de préférence dans la surface d'enveloppe extérieure (10) de l'élément de raccordement (2) dans la zone d'enrobage (4) .

11. Raccord de transition (1) selon l'une des revendications 1 à 10, **caractérisé en ce que** le raccord de transition (1) a un diamètre intérieur continu de bout en bout, sans mamelon intérieur saillant destiné au coulissement des extrémités de tube.
